Europäisches Patentamt

European Patent Office

Office européen des brevets

(11) Publication number: **0 077 835**
A1

# (12) EUROPEAN PATENT APPLICATION

published in accordance with Art. 158(3) EPC

(21) Application number: 82901305.1

(22) Date of filing: 30.04.82

Data of the international application taken as a basis:

(86) International application number:
PCT/JP82/00146

(87) International publication number:
WO82/03930 (11.11.82 82/27)

(51) Int. Cl.³: **G 06 F 13/00**
**G 05 B 19/00**

(30) Priority: 30.04.81 JP 65873/81

(43) Date of publication of application:
04.05.83 Bulletin 83/18

(84) Designated Contracting States:
CH DE FR GB LI

(71) Applicant: Fanuc Ltd
5-1, Asahigaoka, 3-chome
Hino-shi, Tokyo 191(JP)

(72) Inventor: KURAKAKE, Mitsuo
Izumi-Haitsu 103 3-3-10, Tamadaira
Hino-shi, Tokyo 191(JP)

(72) Inventor: UCHIDA, Tatsumi
3-7-15, Tamadaira, Hino-shi
Tokyo 191(JP)

(74) Representative: Billington, Lawrence Emlyn et al,
HASELTINE LAKE & CO Hazlitt House 28 Southampton
Buildings Chancery Lane
London WC2A 1AT(GB)

(54) DATA EXCHANGING METHOD AND DEVICE.

(57) A system whereby a data processor may exchange information with a corresponding processor by referring to data stored in a memory (3) commonly accessible to a sufficient number of processors (1,2) in a data exchanging device having the processor (1,2) and the memory (3) accessible to the respective processors. Each processor has a timing control circuit (7) for sequencing the memory accessing (3) and accesses the memory based on first and second timing signals ($I_1, I_3$) which are respectively sequenced to be generated from the timing control circuit.

Fig. 3

Croydon Printing Company Ltd.

<u>DESCRIPTION</u>

DATA EXCHANGE METHOD AND APPARATUS

<u>Technical Field</u>

This invention relates to a method and apparatus for exchanging data and, more particularly, to a data exchange method and apparatus in a data processing system wherein a plurality of processors exchange information via a common memory, the method and apparatus being so improved as to raise the speed at which data is exchanged by controlling the access period with respect to each of the plurality of processors.

<u>Background Art</u>

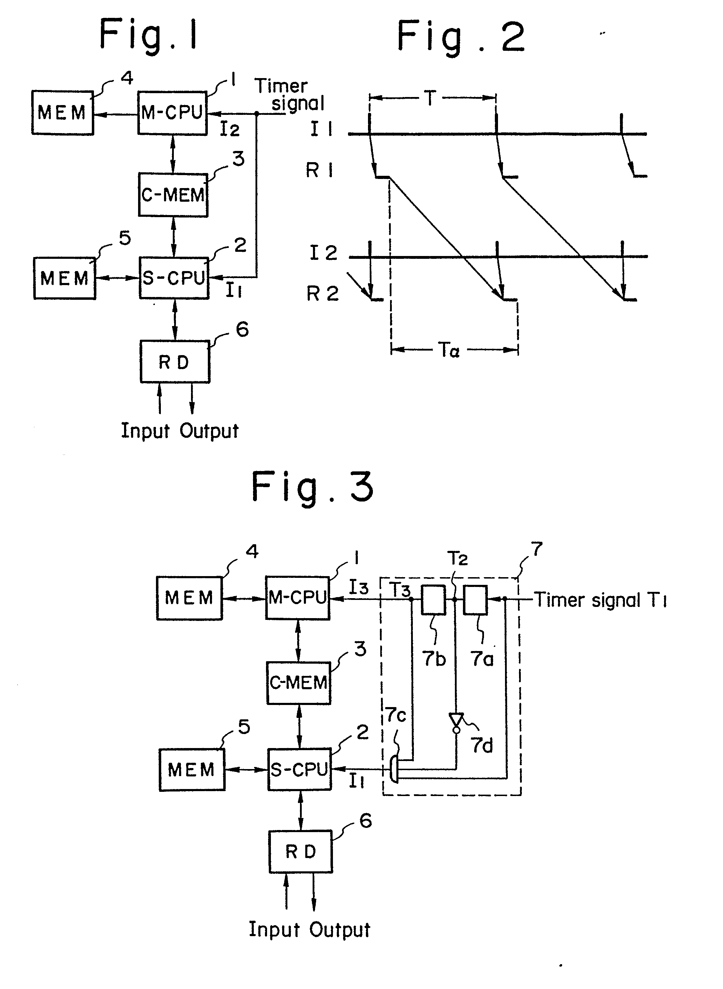

When data is to be exchanged among a plurality of processors each of which executes data processing separately of the others, a technique is employed in which a common memory is provided and the data is exchanged through the intermediary of the common memory. This is an effective method which, by virtue of the common memory, allows data to be exchanged without affecting the individual data processing operations. In a method of this kind, the system is arranged as shown in Fig. 1 in order that the plurality of processors will not access the common memory at the same time. Referring now to Fig. 1 which is a diagram showing the arrangement of the conventional sytem, processors 1 and 2, which are connected to their own memories 4, 5, respectively, are each connected to a common memory 3. Each of the processors 1, 2 may access the common memory 3 by an interrupt effected by a timer signal of period T depicted in the time chart of Fig. 2. In the illustrated example, processor 1 serves as the master processor (main processor) and processor 2 serves as the slave processor (subprocessor). The processor 2 is arranged for data input and output with an external input/output unit through a receiver/driver 6. With such an arrangement, memory access is achieved through an interrupt initiated by a timer signal, with the pair of processors 1, 2 accessing the common memory alternatingly in response to the timer signal to prevent the processors from contending with each other for access to the common memory. In other words, as shown in Fig. 2, processor 2 executes data processing R1 in response to an interrupt I1, with the result of processing being written into the common memory 3. Processor 1, in response to an interrupt I2, accepts from the common memory 3 the result of the computation performed by processor 2 one period earlier. Thus, each processor accesses the memory at the period T, and the data exchange operation takes place after a delay Td, which is approximately equivalent to the period T.

In the abovementioned case where the processors 1, 2 have the main processor-subprocessor relationship, it is necessary that the subprocessor 2 transmit the data, arriving via the receiver/driver 6, to the main processor 1 in rapid fashion and that the main processor 1 be allowed to process this data appropriately. According to the prior art, therefore, the time required to effect the data exchange (the time delay) Td is shortened by shortening the access period T. With this expedient, however, the processors 1, 2 are interrupted in accordance with the shorter access period and, with each interrupt, the particular processor must halt its normal processing and access the common memory 3, causing a decline in the efficiency of the data processing executed by that processor.

Accordingly, an object of the present invention is to provide a data exchange method and apparatus in a data processing system, wherein it is possible to perform data exchange rapidly without any decline in data processing efficiency.

Another object of the present invention is to provide a data exchange method and apparatus in a data processing system, wherein data is exchanged rapidly without shortening the memory access period.

Yet another object of the present invention is to provide a data exchange method and apparatus in a data processing system, wherein it is possible to lengthen the period of an interrupt generated for accessing a memory.

Disclosure of the Invention

According to the present invention, in a system having a plurality of processors and a memory capable of being accessed commonly by each of the processors, wherein each processor exchanges data with the other processors by referring to data stored in the memory, a timing control circuit is provided for staggering the timing at which the memory is accessed, each of the processors accessing the memory based on staggered first and second timing signals generated by the timing control circuit. Because the plurality of processors access the common memory at a staggered timing, the present invention makes it possible to raise the speed required for exchanging data but does not shorten the access period for each processor. The invention therefore does not increase processor load and is particularly useful in main-subprocessor configurations.

Brief Description of the Drawings

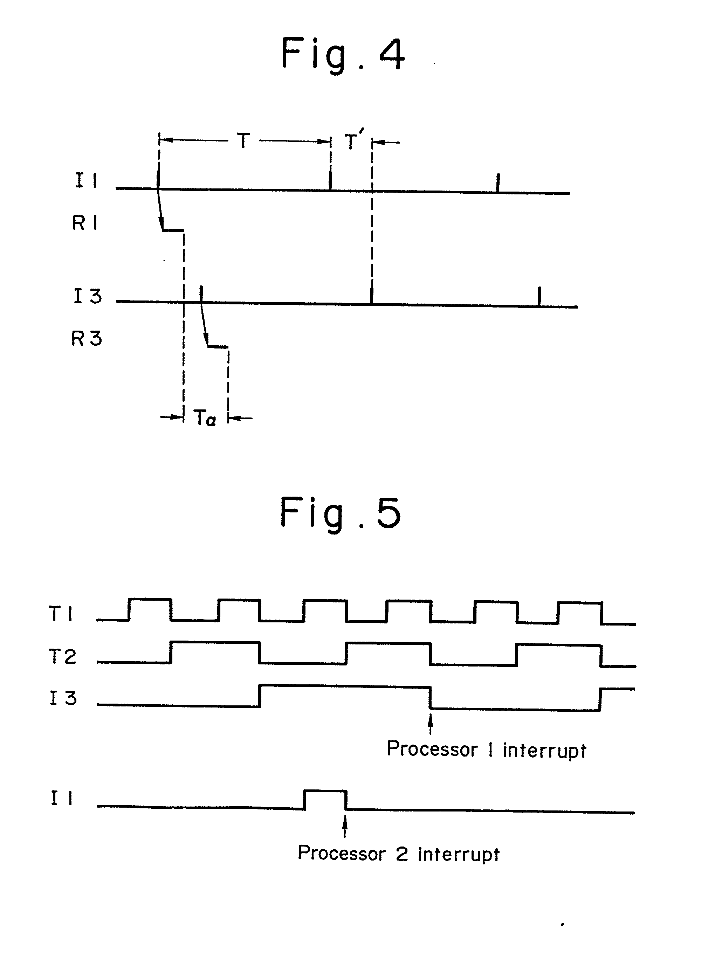

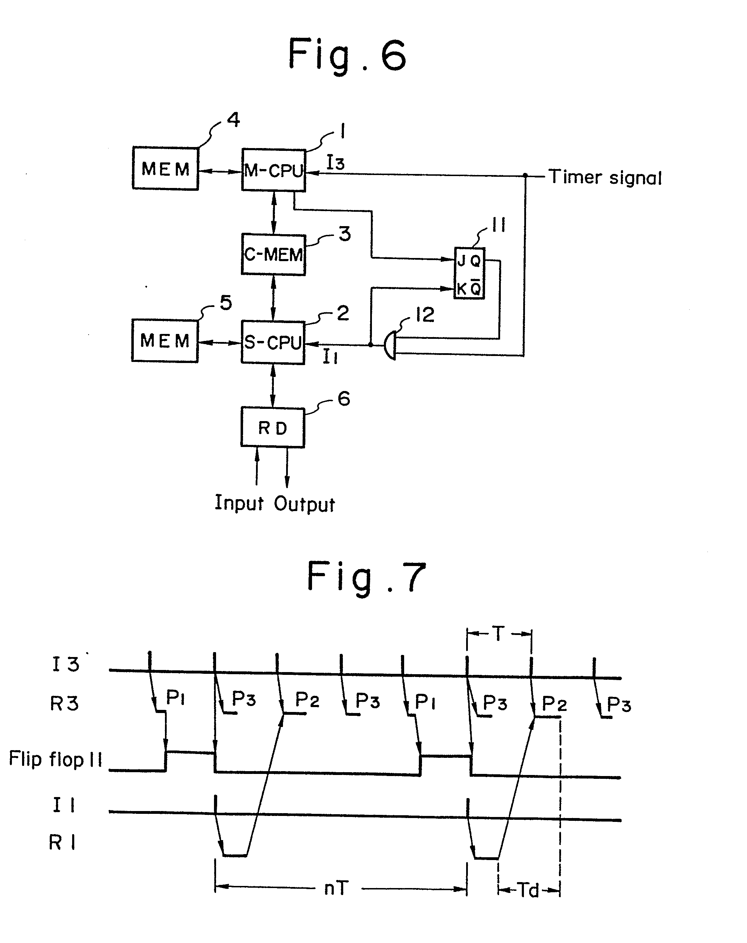

Fig. 1 is a view showing an example of the conventional arrangement; Fig. 2 is a time chart for describing memory access according to the prior art; Fig. 3 is a view showing an arrangement embodying the present invention; Fig. 4 is an explanatory view of memory access according to an embodiment of the present invention; Fig. 5 is a diagram of various waveforms associated with an embodiment of the present invention; and Figs. 6, 7 are explanatory views of a method based on interrupt frequency division by means of software.

Best Mode for Carrying Out the Invention

The present invention will now be described in detail in accordance with an embodiment thereof.

Fig. 3 is a block diagram illustrating an embodiment of the present invention, Fig. 4 is an explantory view illustrating memory access with respect to Fig. 3, and Fig. 5 is a diagram of various waveforms. The following description relates to a numerical control system in which the processor 1 operates as the main processor of a numerical control device, and the processor 2 operates as a programmable sequence controller, the latter being connected to a machine such as a machine tool or robot.

In the figure, numeral 1 denotes the main processor constituting the numerical control device which provides numerical control commands based on input data. Numeral 2 denotes the subprocessor constituting a sequence controller for executing predetermined sequence processing based on a miscellaneous function command (M-function command), a tool change command and other commands issued by the main processor 1 of the numerical control device, for delivering the results of processing to a machine tool through the receiver/driver 6, and for reading, via the driver/receiver 6, signals produced by the machine tool, such as a signal indicating the end of an M-function operation, a limit switch signal and a sensor signal, the controller carrying out predetermined processing and delivering the results to the numerical control device. Numeral 3 denotes the common memory which is used for an exchange of data between the main processor 1 and subprocessor 2. Numerals 4 and 5 denote the memories for accommodating the program and data associated with the respective processors 1, 2. Numeral 6 denotes the receiver/driver for input and output with the machine, not shown. Numeral 7 denotes an interrupt timing control circuit for producing two kinds of interrupt signals I1, I3, as will be set forth below, from a timer signal T1.

Operation will be described next. The main processor 1, on the basis of part program data punched in a paper tape or the like, executes numerical control processing under the control of a control program stored in the memory 4 and writes the result of such processing into the common memory 3. The subprocessor 2, on the other hand, reads M- and T-function commands, etc., issued by the main processor 1 and stored in the common memory 3, executes sequence processing based on a sequence program stored in its own memory 5, and delivers the results of processing to the machine tool, thereby controlling the same, via the receiver/driver 6. An input signal from the machine side enters the subprocessor 2 via the receiver/driver 6 and is written into the common memory 3 by the subprocessor 2. The main processor 1 reads the machine side input out of the the common memory 3 and executes predetermined processing based on the program in memory 4. In a case such as this, the main processor 1 and subprocessor 2 exchange NC data, limit switch signals and the like through the intermediary of the common memory 3. When the machine side issues an alarm signal such as an over-travel signal or emergency stop signal, it required that the alarm signal be transmitted to the main processor rapidly so that appropriate processing may be executed.

Consequently, in accordance with this embodiment, a timing control circuit 7 is provided for controlling the timing at which each of the processors 1 and 2 accesses the common memory 3.

Specifically, as shown in Fig. 4, the interrupt signal I1 for subprocessor 2 and the interrupt signal I3 for main processor 1 are staggered by a length of time T'. Accordingly, the time for transmission from the subprocessor 2 to the processor 1 is T2. The transmission time can thus be shortened by a wide margin in comparison with the prior art.

To accomplish the foregoing the timing control circuit 7 is composed of two flip-flop circuits 7a, 7b, a three-input AND gate 7c and a NOT gate 7d. At the beginning of operation, the timer signal T1 arrives as an input signal and is frequency-divided by the flip-flop circuit 7a to produce an output signal T2. The output T2 is frequency-divided even further by the flip-flop circuit 7b, producing an output I3 which is used as the interrupt signal for the processor 1. Meanwhile, since the three inputs to the three-input AND gate 7c are the timer signal T1, the signal T2 following inversion by the NOT gate 7d, and the output I3, the AND gate provides the output I1. The output I1 is used an the interrupt signal for the subprocessor 2. As shown in Fig. 5, notification of the interrupt is given with the negative-going transition of the interrupt signal, so that the processors 2, 1 are interrupted by the interrupt signals

I1, I3, respectively, at the instants shown by the arrows. It should be noted that the foregoing timing control circuit 7 may employ, besides the above-described arrangement, a method which relies upon a delay circuit, a method based on an interrupt frequency division executed by software, or other well-known means.

Figs. 6 and 7 are explanatory views for describing a method based on such interrupt frequency division, wherein Fig. 6 is a block diagram and Fig. 7 a waveform diagram. Portions similar to those shown in Fig. 3 are denoted by like reference characters and a detailed description thereof is deleted. In the figure, numeral 11 denotes a flip-flop, and 12 an AND gate. In the absence of the subprocessor, the main processor 1 executes data processing with an interrupt of period T. Assume now that solely the subprocessor 2 is connected into the circuit with an interrupt of period nT so that the main processor 1 and subprocessor 2 exchange data at intervals nT. Thus, Td = nT would hold in this case. Accordingly, the flip-flop 11 is provided to control the interrupt timing of the sub-processor 2 during the interrupt of main processor 1. More specifically, processing P1 includes a step wherein data is set in the flip-flop 11. Then, at a subsequent timing decided by the next timer pulse, an interrupt is generated with respect to the subprocessor 2 which responds by executing processing R1. Subsequently, at a timing decided by the next timer pulse, the main processor 1 performs processing P2 which includes acquiring the data from the subprocessor 2. For interrupts other than those mentioned, the main processor 1 executes processing P3 unrelated to the subprocessor 2. If the main processor 1 and subprocessor 2 are controlled in the above-described manner, the period at which these processors mutually access the data exchange memory 3 is nT, but the delay required for the exchange of data is given by Td = T.

The common memory 3 may be a part of the memories possessed by each of the processors 1, 2, or a register contained in the processors 1, 2.

## Industrial Applicability

According to the present invention, a plurality of processors access a common memory at a staggered timing so that it is possible to raise the speed at which data is exchanged without shortening the access period of each processor. Hence there is no increase in processor load, so that the invention is useful in main-subprocessor configurations.

What is claimed is:

1.  In a system having a plurality of processors and a memory capable of being accessed commonly by each of said processors, wherein each processor exchanges data with the other processors by referring to data stored in said memory, a data exchange method characterized by including a step of causing each of said processors to access said memory at a timing which is different for each processor.

2.  A data exchange method according to claim 1, characterized in that said step includes a step of generating mutually differing timings at which interrupt signals for corresponding ones of the processors are produced, a step of applying each of the interrupt signals to the corresponding processor, and a step of accessing said memory in response to the production of a corresponding interrupt signal.

3.  A data exchange apparatus having a plurality of processors and a memory capable of being accessed commonly by each of said processors, wherein each processor exchanges data with the other processors by referring to data stored in said memory, characterized in that said data exchange apparatus includes means for causing each of said processors to access said memory at a timing which is different for each processor.

4.  A data exchange apparatus according to claim 3, characterized in that said means includes a unit for staggering the timing at which interrupt signals for corresponding ones of the processors are produced, and an interrupt unit, provided for each processor, for
receiving the corresponding interrupt signal, and for
interrupting the processor and accessing said memory in
response to receipt of said interrupt signal.

5.  A data exchange apparatus according to claim 3 or
claim 4, characterized in that one of said plurality of
processors is a main processor and the others are
subprocessors connected to input/output units, said main
processor controlling said subprocessors.

6.  A data exchange apparatus according to claim 5,
characterized in that said subprocessors execute
sequential processing and said main processor controls
said sequential processing.

7.  A data exchange apparatus according to claim 6,
characterized in that said main processor constitutes a
numerical control device and said subprocessors execute
sequential processing, based on commands from said
numerical control device, for controlling machines
connected to said subprocessors.

# Fig.1

# Fig.2

# Fig.3

# Fig. 4

# Fig. 5

Processor 1 interrupt

Processor 2 interrupt

# Fig. 6

# Fig. 7

# INTERNATIONAL SEARCH REPORT

**0077835**

International Application No. PCT/JP82/00146

| I. CLASSIFICATION OF SUBJECT MATTER (if several classification symbols apply, indicate all) ³ |
|---|
| According to International Patent Classification (IPC) or to both National Classification and IPC |
| Int. Cl.³ G06F 13/00, G05B 19/00 |

| II. FIELDS SEARCHED |
|---|

**Minimum Documentation Searched ⁴**

| Classification System | Classification Symbols |
|---|---|
| I P C | G06F 13/00, G05B 19/00 |

**Documentation Searched other than Minimum Documentation to the Extent that such Documents are Included in the Fields Searched ⁵**

| | | |
|---|---|---|
| | Jitsuyo Shinan Koho | 1968 – 1981 |
| | Kokai Jitsuyo Shinan Koho | 1971 – 1981 |

**III. DOCUMENTS CONSIDERED TO BE RELEVANT ¹⁴**

| Category* | Citation of Document, ¹⁶ with indication, where appropriate, of the relevant passages ¹⁷ | Relevant to Claim No. ¹⁸ |
|---|---|---|
| X | JP,A, 50-99055 (Fujitsu Ltd.) 6. August. 1975 (06.08.75), Column 3, line 13 to column 4, line 8 & JP,A, 51-11534 (Toshiba Corp.) 29. January. 1976 (29.01.76), Column 3, line 2 to column 4, line 17 | 1,2,3,4 |
| Y | JP,A, 50-99055 (Fujitsu Ltd.) 6. August. 1975 (06.08.75), Column 3, line 13 to column 4, line 8 | 5, 6, 7 |
| Y | JP,A, 51-11534 (Toshiba Corp.) 29. January. 1976 (29.01.76), Column 3, line 2 to column 4, line 17 | 5, 6, 7 |
| Y | JP,A, 56-42804 (Shinco Electric Co., Ltd.) 21. April. 1981 (21.04.81), Column 14, line 3 to column 15, line 8 | 5, 6, 7 |
| Y | JP,A, 51-110182 (Mitsubishi Electric Corp.), 29. September. 1976 (29.09.76), Column 1, lines 5 to 7 | 7 |

\* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

| IV. CERTIFICATION |
|---|

| Date of the Actual Completion of the International Search ³ | Date of Mailing of this International Search Report ³ |
|---|---|
| July 23, 1982 (23.07.82) | August 2, 1982 (02.08.82) |

| International Searching Authority ¹ | Signature of Authorized Officer ²⁰ |
|---|---|
| Japanese Patent Office | |

Form PCT/ISA/210 (second sheet) (October 1981)